# EUROPÄISCHE PATENTSCHRIFT

(11) **EP 3 271 197 B1**
(45) Veröffentlichungstag und Bekanntmachung des Hinweises auf die Patenterteilung: **17.07.2019**
(21) Anmeldenummer: 16705184.6
(22) Anmeldetag: 19.02.2016
(51) Int. Cl.: B60G 21/055, B62D 33/06

(54) **AKTIVER STABILISATOR FÜR EINE FAHRERKABINE EINES KRAFTFAHRZEUGS**
ACTIVE STABILISER FOR A DRIVER CABIN OF A MOTOR VEHICLE
BARRE STABILISATRICE ACTIVE POUR CABINE DE CONDUCTEUR D'UN VÉHICULE À MOTEUR

(30) Priorität: 20.03.2015 DE 102015205045
(43) Veröffentlichungstag der Anmeldung: 24.01.2018
(73) Patentinhaber: ZF Friedrichshafen AG, 88046 Friedrichshafen (DE)
(72) Erfinder: LANGHORST, Friedhelm, 49356 Diepholz (DE); OSWALD, Christian, 49356 Diepholz (DE)
(86) Internationale Anmeldenummer: PCT/EP2016/053494
(87) Internationale Veröffentlichungsnummer: WO 2016/150626

(56) Entgegenhaltungen:
- EP-A1- 2 070 743
- EP-A2- 1 103 397
- EP-B1- 2 219 936
- WO-A1-00/09351
- DE-A1-102007 001 544
- DE-A1-102009 005 899
- JP-A- 2005 088 722

## Beschreibung

Die Erfindung betrifft einen aktiven Stabilisator für eine Fahrerkabine eines Kraftfahrzeugs, mit einem sich in einer Querrichtung erstreckenden Verbindungsglied, zwei in Querrichtung zueinander beabstandeten und durch das Verbindungsglied miteinander verbundenen Hebeln, die sich senkrecht oder näherungsweise senkrecht zur Querrichtung von dem Verbindungsglied wegerstrecken, und einem ein Schneckengetriebe und einen unter Zwischenschaltung des Schneckengetriebes mit dem Verbindungsglied gekoppelten Motor umfassenden Aktor, mittels welchem das Verbindungsglied um eine in Querrichtung verlaufende Drehachse relativ zu einem ersten der Hebel drehbar ist.

Das Federungssystem eines Nutzkraftfahrzeugs wird in der Regel in ein Primärfederungssystem für das Fahrwerk und ein Sekundärfederungssystem für die Fahrerkabine unterteilt. Aufgrund der großen Gewichtsunterschiede zwischen dem ungeladenen und dem vollbeladenen Nutzkraftfahrzeug unterliegt die Konstruktion des Primärfederungssystems großen Einschränkungen. Bei der Entwicklung des Sekundärfederungssystems, welches auch Fahrerhauslagerung genannt wird, liegt daher der Fokus auf Fahrkomfort und Fahrzeugrückmeldung. Zurzeit finden vor allem Luftfedern an jeder Ecke der Fahrerkabine zur Realisierung des Fahrkomforts Anwendung. Die geringe Steifigkeit der Luftfedern verursacht bei Kurvenfahrten jedoch ein starkes Wanken der Fahrerkabine. Zur Reduzierung des Wankens wird z.B. ein Stabilisator mit einer steifen Drehstabfeder eingesetzt, wobei sich auf unebenen Straßenoberflächen aber Komforteinbußen ergeben können. Somit sind die Eingriffsmöglichkeiten mit passiven Lösungsansätzen weitestgehend ausgeschöpft.

Durch die hohe Schwerpunktlage der Fahrerkabine ist eine starke Wankabstützung erforderlich und somit die komfortable Auslegung der Querdynamik schwierig. Eine mögliche Lösung ist der Einsatz eines aktiven Wankstabilisators. Dieser umfasst eine in zwei Hälften getrennte Drehstabfeder und einen aktiv steuerbaren und/oder regelbaren Aktor, mittels welchem die beiden Drehstabfederhälften aktiv gegeneinander verdreht werden können, sodass das Wanken der Fahrerkabine reduziert oder ganz vermieden werden kann. Aktive Wankstabilisatoren sind im Bereich der Nutzkraftfahrzeuge jedoch kaum vorhanden. Allerdings existieren Entwicklungsprojekte mit einem hydraulischen Steller für eine hintere oder vordere aktive Fahrerhauslagerung. Im Bereich der Personenkraftwagen existieren hingegen aktive Wankstabilisierungen mit einem hydraulischen Steller oder einem Elektromotor als Aktor. Bei einer elektromechanischen Lösung ist z.B. der Einsatz eines Elektromotors mit einem Planetengetriebe üblich. Für diese Lösung ist jedoch eine zusätzliche Haltebremse vorzusehen, um bei einem Ausfall der Stromversorgung für den Elektromotor einen betriebssicheren Zustand erreichen zu können. Bei einem hydraulischen Aktor wird dieser Zustand z.B. mit einer residualen Steifigkeit bzw. einem weichen Torsionsstab als Redundanzsystem realisiert. Zudem lässt sich mit der Kombination aus Elektromotor und Planetengetriebe nur eine koaxiale Anordung realisieren. Für das hohe Stellmoment, welches in einem Nutzkraftfahrzeug benötigt wird, müsste allerdings ein mehrstufiges Planetengetriebe eingesetzt werden. Aufgrund der koaxialen Anordnung ist daher ein langer Bauraum erforderlich. Dieser steht in einem Nutzkraftfahrzeug jedoch nur eingeschränkt zur Verfügung. Eine Alternative wäre die Kombination des Elektromotors mit einem Schneckengetriebe. Eine derartige Lösung ist z.B. aus der JP 2005-088722 A bekannt, die einen aus Elektromotor und Schneckengetriebe bestehenden Aktor offenbart, der zwischen die beiden Teile eines zweigeteilten Stabilisatorstabs geschaltet ist. Bei dieser Lösung ist die Anordnung des Elektromotors mit Schneckengetriebe als elektromechanischer Aktor jedoch für den Einsatz im Nutzkraftfahrzeug ungünstig, da für den Aktor viel Bauraum zwischen den Hebeln und somit in einem kritischen Bereich erforderlich ist.

Ausgehend hiervon liegt der Erfindung die Aufgabe zugrunde, bei einem aktiven Stabilisator der eingangs genannten Art den für den Aktor erforderlichen Bauraum zwischen den Hebeln verringern zu können.

Diese Aufgabe wird durch einen aktiven Stabilisator nach Anspruch 1 gelöst. Bevorzugte Weiterbildungen des aktiven Stabilisators sind in den Unteransprüchen und in der nachfolgenden Beschreibung gegeben.

Der aktive Stabilisator für eine Fahrerkabine eines Kraftfahrzeugs weist ein sich in einer Querrichtung erstreckendes Verbindungsglied, zwei in Querrichtung zueinander beabstandete und durch das Verbindungsglied miteinander verbundene Hebel, die sich senkrecht oder näherungsweise senkrecht zur Querrichtung von dem Verbindungsglied wegerstrecken, und einen ein Schneckengetriebe und einen unter Zwischenschaltung des Schneckengetriebes mit dem Verbindungsglied gekoppelten Motor umfassenden Aktor auf, mittels welchem das Verbindungsglied um eine in Querrichtung verlaufende Drehachse relativ zu einem ersten der Hebel drehbar ist, wobei der Aktor, vorzugsweise direkt, an dem ersten Hebel und/oder im Bereich des ersten Hebels angeordnet ist. Durch die vorgenannte Anordnung des Aktors wird erreicht, dass der Raum zwischen den Hebeln frei von dem Aktor bleibt. Ferner ist eine Zweiteilung des Verbindungsglieds nicht erforderlich, sodass die Anzahl der erforderlichen Bauteile und somit auch der Montageaufwand reduzierbar sind. Die Drehachse, um welche das Verbindungsglied mittels des Aktors relativ zu dem ersten Hebel drehbar ist, ist insbesondere eine Längsachse und/oder Längsmittelachse des Verbindungsglieds.

Das Verbindungsglied ist vorzugsweise eine Drehstabfeder. Bei der Drehachse, um welche das Verbindungsglied mittels des Aktors relativ zu dem ersten Hebel drehbar ist, handelt es sich insbesondere um die Drehachse der Drehstabfeder. Das Verbindungsglied ist z.B. durch ein Torsionsprofil, durch eine Stange oder durch ein Rohr gebildet. Beispielsweise ist das Verbindungsglied als Rotationskörper oder als U-Profil ausgebildet. Bevorzugt besteht das Verbindungsglied aus Metall, insbesondere aus Stahl.

Das Schneckengetriebe umfasst eine Schnecke und ein Schneckenrad, welches mit der Schnecke kämmt. Die Schnecke ist bevorzugt um eine Schneckenachse drehbar. Ferner ist das Schneckenrad bevorzugt um eine Schneckenradachse drehbar, die insbesondere mit der Drehachse zusammenfällt, sodass das Schneckenrad insbesondere um die Drehachse drehbar ist. Die Schnecke besteht vorzugsweise aus Metall, insbesondere aus Stahl. Ferner besteht das Schneckenrad vorzugsweise aus Metall, insbesondere aus Stahl.

Bevorzugt umfasst der Motor einen, insbesondere um eine Motorachse drehbaren, Rotor, der die Schnecke umfasst und mit der Schnecke drehstarr verbunden ist. Ferner umfasst der Motor bevorzugt einen Stator, relativ zu welchem der Rotor, insbesondere um die Motorachse, drehbar ist. Vorzugsweise ist der Rotor, insbesondere um die Motorachse, drehbar am oder im Stator gelagert. Bevorzugt umringt der Stator den Rotor.

Gemäß einer Weiterbildung umfasst der Motor ein Motorgehäuse. Der Rotor und/oder der Stator ist bevorzugt im Motorgehäuse angeordnet. Insbesondere ist der Rotor, vorzugsweise um die Motorachse, relativ zu dem Motorgehäuse drehbar. Bevorzugt ist der Rotor, insbesondere um die Motorachse, drehbar am oder im Motorgehäuse gelagert. Das Motorgehäuse besteht vorzugsweise aus Kunststoff oder aus Metall. Vorteilhaft umfasst der Motor eine, insbesondere um die oder eine Motorachse drehbare, Motorwelle, die vorzugsweise die Schnecke umfasst und/oder mit der Schnecke, insbesondere starr oder drehstarr, verbunden ist. Bevorzugt ist die Motorwelle relativ zu dem Motorgehäuse und/oder dem Stator, insbesondere um die Motorachse, drehbar. Vorzugsweise ist die Motorwelle, insbesondere um die Motorachse, drehbar am oder im Motorgehäuse und/oder Stator gelagert. Der Rotor umfasst oder bildet bevorzugt die Motorwelle. Insbesondere ist die Motorwelle starr oder drehstarr mit dem Rotor verbunden. Die Motorwelle besteht vorzugsweise aus Metall, insbesondere aus Stahl. Das Motorgehäuse umfasst oder bildet bevorzugt den Stator. Insbesondere ist das Motorgehäuse starr mit dem Stator verbunden.

Der Aktor umfasst vorzugsweise ein Getriebegehäuse, in welchem das Schneckengetriebe angeordnet ist. Beispielsweise ist das Motorgehäuse durch das Getriebegehäuse gebildet und/oder mit dem Getriebegehäuse, vorzugsweise starr und/oder direkt, verbunden. Vorteilhaft ist das Getriebegehäuse durch den ersten Hebel gebildet und/oder mit dem ersten Hebel, vorzugsweise starr und/oder direkt, verbunden. Das Getriebegehäuse besteht bevorzugt aus Kunststoff oder aus Metall.

Die Schneckenachse fällt vorzugsweise mit der Motorachse zusammen, sodass die Schnecke vorzugsweise um die Motorachse drehbar ist. Die Schnecke ist insbesondere durch den Motor und/oder den Rotor und/oder die Motorwelle, bevorzugt um die Motorachse und/oder die Schneckenachse, drehbar und/oder antreibbar.

Der Motor kann z.B. ein Hydraulikmotor sein. In diesem Fall ist der Motor beispielsweise an ein Hydrauliksystem des oder eines Kraftfahrzeugs angeschlossen. Bevorzugt ist der Motor aber ein Elektromotor. In diesem Fall ist der Motor vorzugsweise an eine elektrische Stromversorgungseinrichtung des oder eines Kraftfahrzeugs angeschlossen. Das Anschließen eines Elektromotors an eine elektrische Stromversorgungseinrichtung durch elektrische Leitungen ist in der Regel deutlich einfacher und kostengünstiger realisierbar, als das Anschließen eines Hydraulikmotors an ein Hydrauliksystem durch Hydraulikleitungen. Der Stator umfasst insbesondere wenigstens einen oder mehrere Permanentmagnete und/oder wenigstens eine oder mehrere elektrische Spulen. Vorteilhaft umfasst der Rotor wenigstens einen oder mehrere Permanentmagnete und/oder wenigstens eine oder mehrere elektrische Spulen. Umfasst der Aktor als Motor einen Elektromotor, so kann der Aktor z.B. auch als elektromechanischer Aktor bezeichnet werden.

Der Elektromotor ist von der elektrischen Stromversorgungseinrichtung insbesondere mit elektrischer Energie versorgbar. Bevorzugt ist der Elektromotor über einen elektrischen Spannungswandler an die elektrische Stromversorgungseinrichtung angeschlossen. Die Stromversorgungseinrichtung ist oder umfasst z.B. eine oder wenigstens eine Batterie und/oder einen oder wenigstens einen elektrischen Generator. Bei der Batterie handelt es sich bevorzugt um einen Akkumulator. Bei dem elektrischen Generator handelt es sich bevorzugt um eine Lichtmaschine.

Gemäß einer Weiterbildung ist eine Steuerungsvorrichtung vorgesehen, mittels welcher der Motor steuerbar ist. Bei der Steuerungsvorrichtung handelt es sich insbesondere um eine elektrische Steuerungsvorrichtung. Bevorzugt ist die Steuerungsvorrichtung, insbesondere elektrisch, mit dem Motor und/oder mit dem elektrischen Spannungswandler und/oder mit der Stromversorgungseinrichtung verbunden. Beispielsweise umfasst die Steuerungsvorrichtung den elektrischen Spannungswandler.

Ein dem ersten Hebel zugewandter Endbereich des Verbindungsglieds wird insbesondere als erster Endbereich bezeichnet. Ferner wird ein einem zweiten der Hebel zugewandter Endbereich des Verbindungsglieds insbesondere als zweiter Endbereich bezeichnet. Bevorzugt ist das Verbindungsglied und/oder der oder ein erster Endbereich des Verbindungsglieds unter Zwischenschaltung des Aktors mit dem ersten Hebel verbunden. Vorteilhaft ist das Verbindungsglied und/oder der oder ein zweiter Endbereich des Verbindungsglieds, insbesondere starr oder drehstarr und/oder direkt, mit dem zweiten Hebel oder mit einem zweiten der Hebel verbunden. Der zweite Hebel weist bevorzugt eine Verbindungsgliedaufnahme auf, in die das Verbindungsglied und/oder der zweite Endbereich, vorzugsweise direkt, eingesetzt ist. Handelt es sich bei dem Verbindungsglied um eine Drehstabfeder, so wird die Verbindungsgliedaufnahme insbesondere auch als Drehstabfederaufnahme bezeichnet.

Gemäß der Erfindung ist das Schneckenrad, insbesondere starr oder drehstarr, mit dem Verbindungsglied verbunden. Das Schneckenrad ist, insbesondere starr oder drehstarr, mit dem oder einem ersten Endbereich des Verbindungsglieds verbunden. Das Verbindungsglied und das Schneckenrad sind, insbesondere bezüglich der Drehachse, vorzugsweise konzentrisch und/oder koaxial angeordnet. Bevorzugt ist der Stator und/oder das Motorgehäuse, insbesondere starr oder drehstarr und/oder direkt, an oder mit dem ersten Hebel befestigt oder verbunden.

Gemäß einer nicht erfindungsgemäßen Alternative ist das Schneckenrad, insbesondere starr oder drehstarr, mit dem ersten Hebel verbunden. Bevorzugt ist der Stator und/oder das Motorgehäuse, insbesondere starr oder drehstarr, an oder mit dem Verbindungsglied befestigt oder verbunden. Beispielsweise ist der Stator und/oder das Motorgehäuse, insbesondere starr oder drehstarr, an oder mit dem oder einem ersten Endbereich des Verbindungsglieds befestigt oder verbunden.

Das Schneckengetriebe ist vorzugsweise selbsthemmend ausgebildet. Bei ruhendem Aktor und/oder bei einem Ausfall des Aktors, beispielsweise aufgrund eines Stromausfalls, ist der erste Hebel somit insbesondere starr oder drehstarr mit dem Verbindungsglied und/oder mit dem oder einem ersten Endbereich des Verbindungsglieds verbunden. Hierdurch ist eine Sicherheitsfunktion geschaffen, ohne dass eine Haltebremse erforderlich ist.

Gemäß einer nicht erfindungsgemäßen Weiterbildung umfasst der Aktor ein oder zumindest ein zusätzliches Getriebe, welches insbesondere mit dem Schneckengetriebe in Reihe geschaltet ist. Das zusätzliche Getriebe ist beispielsweise ein Planetengetriebe oder ein Gleitkeilgetriebe oder Harmonic-Drive-Getriebe. Durch das zusätzliche Getriebe ist insbesondere eine höhere Übersetzung erzielbar. Vorzugsweise stellt das Schneckengetriebe dabei das Übertragungsgetriebe für das von dem Aktor auf das Verbindungsglied und/oder den ersten Hebel zu übertragende Drehmoment dar. Somit kann z.B. die vorteilhafte Funktion des Schneckengetriebes in Bezug auf die Selbsthemmung weiter genutzt werden und dennoch eine hohe, vorzugsweise nahezu verlustfreie, Übersetzung durch das zusätzliche Getriebe realisiert werden.

Gemäß einer Ausgestaltung ist das Verbindungsglied und/oder sind die Hebel im Bereich des Verbindungsglieds und/oder im Bereich der Drehachse an einer ersten Fahrzeugkomponente gelagert. Bei der ersten Fahrzeugkomponente handelt es sich insbesondere um eine Fahrzeugkomponente des oder eines Kraftfahrzeugs. Bevorzugt sind die Hebel im Abstand zur Drehachse und/oder zum Verbindungsglied an einer zweiten Fahrzeugkomponente gelagert. Bei der zweiten Fahrzeugkomponente handelt es sich insbesondere um eine Fahrzeugkomponente des oder eines Kraftfahrzeugs. Bevorzugt weisen die Hebel im Abstand zur Drehachse und/oder an ihren dem Verbindungsglied abgewandten Enden jeweils eine Lageraufnahme auf, in die vorzugsweise ein Gummilager oder Gelenk eingesetzt ist, wobei die Hebel mittels der Gummilager oder Gelenke insbesondere an der zweiten Fahrzeugkomponente gelagert sind. Die Lageraufnahmen sind z.B. jeweils als Lagerauge ausgebildet.

Gemäß einer Weiterbildung ist eine der Fahrzeugkomponenten durch die oder eine Fahrerkabine und eine andere der Fahrzeugkomponenten durch einen Fahrzeugrahmen gebildet. Beispielsweise ist die erste Fahrzeugkomponente durch den Fahrzeugrahmen gebildet, wobei die zweite Fahrzeugkomponente durch die Fahrerkabine gebildet ist. Alternativ ist z.B. die erste Fahrzeugkomponente durch die Fahrerkabine gebildet, wobei die zweite Komponente durch den Fahrzeugrahmen gebildet ist. Das Kraftfahrzeug ist insbesondere ein Nutzkraftfahrzeug, beispielsweise ein Lastkraftwagen.

Die Hebel erstrecken sich bevorzugt in oder näherungsweise in derselben Richtung von dem Verbindungsglied weg. Vorzugsweise erstrecken sich die Hebel in oder näherungsweise in einer senkrecht zur Querrichtung verlaufenden Längsrichtung. Insbesondere erstrecken sich die Hebel in oder näherungsweise in Längsrichtung von dem Verbindungsglied weg. Die Hebel sind vorzugsweise gerade oder näherungsweise gerade ausgebildet. Bauraumbedingt können die Hebel aber auch einen bereichsweise gekrümmten oder gebogenen Verlauf aufweisen. Beispielsweise sind die Hebel parallel oder näherungsweise parallel angeordnet und/oder ausgerichtet. Die Hebel bestehen bevorzugt aus Metall, insbesondere aus Stahl.

Der Aktor und/oder der Motor und/oder der Rotor und/oder die Motorwelle und/oder die Schnecke und/oder die Schneckenachse und/oder die Motorachse ist vorzugsweise rechtwinklig und/oder senkrecht zum Verbindungsglied und/oder zur Querrichtung und/oder zur Drehachse angeordnet und/oder ausgerichtet. Insbesondere erstreckt sich der Aktor und/oder der Motor und/oder der Rotor und/oder die Motorwelle und/oder die Schnecke und/oder die Schneckenachse und/oder die Motorachse in oder näherungsweise in einer Hochrichtung. Bevorzugt erstreckt sich der Aktor und/oder der Motor und/oder der Rotor und/oder die Motorwelle und/oder die Schnecke in oder näherungsweise in der oder einer Hochrichtung von dem Verbindungsglied und/oder von der Drehachse und/oder von dem ersten Hebel weg. Die Hochrichtung verläuft insbesondere senkrecht zur Querrichtung und/oder senkrecht zur Längsrichtung. Somit ist es möglich, den Stabilisator in Längsrichtung relativ kurz zu bauen, was aufgrund des lediglich begrenzt zur Verfügung stehenden Bauraums vorteilhaft ist.

Bei der Querrichtung handelt es sich bevorzugt um eine Fahrzeugquerrichtung des oder eines Kraftfahrzeugs. Bei der Längsrichtung handelt es sich bevorzugt um eine Fahrzeuglängsrichtung des oder eines Kraftfahrzeugs. Bei der Hochrichtung handelt es sich bevorzugt um eine Fahrzeughochrichtung des oder eines Kraftfahrzeugs.

Im Betrieb des Aktors treibt der Motor die Schnecke an, welche sich über das Schneckenrad abwälzt, sodass das Verbindungsglied relativ zu dem ersten Hebel um die Drehachse gedreht wird. Hierdurch kann ein Wankausgleich der Fahrerkabine realisiert werden. Ist das Schneckengetriebe selbsthemmend ausgebildet, verhindert das Schneckengetriebe bei Ausfall des Motors und/oder der Energieversorgung des Motors eine unkontrollierte Relativbewegung des Verbindungsglieds zum ersten Hebel ohne dabei Energie zu benötigen. Dadurch wird einerseits die Fahrsicherheit gewährleistet und andererseits Energie gespart. Darüber hinaus kann mittels dieser Konstruktion eine ungewollte Belastung des Motors mit Momenten um eine Längsachse und/oder um eine Hochachse des Kraftfahrzeugs im Vergleich zu einem Aktor mit Planetengetriebe verhindert werden.

Umfasst der Aktor einen Elektromotor in Kombination mit einem selbsthemmenden Schneckengetriebe, so ergeben sich insbesondere Vorteile bezüglich Bauraum, Energiebedarf und Sicherheitsfunktion. Einige Vorteile des aktiven Stabilisators mit selbsthemmendem Schneckengetriebe sind nachfolgend aufgeführt:
1) Der Bauraum für einen elektromechanischen Aktor ist aufgrund des geringen Abstands zwischen Kühler und Kühlergrill im Lastkraftwagen sehr eingeschränkt. Der Bauraumbedarf des Aktors wird durch eine rechtwinklige Anordnung zum Verbindungsglied und/oder zur Querrichtung minimiert. Durch die Anordnung des Elektromotors in oder näherungsweise in Hochrichtung wird der Bauraum nach oben genutzt und benötigt weniger Bauraum in Längsrichtung.
2) Eine residuale Steifigkeit als Redundanzsystem kann bei dem aktiven Stabilisator aufgrund der Selbsthemmung des Schneckengetriebes entfallen. Bei einem Ausfall der Energie- und/oder Stromversorgung für den Motor verhindert die Selbsthemmung des Schneckengetriebes die Verdrehung des Verbindungsglieds relativ zum ersten Hebel und somit eine Anregung der Fahrerkabine durch äußere Einflüsse.
3) Durch den Entfall der residualen Steifigkeit wird Energie gespart, da diese nicht zusätzlich durch den Motor überwunden werden muss.
4) Bei Erreichen eines Zielwankwinkels ist wegen der Selbsthemmung des Schneckengetriebes gegenüber einer elektromagnetischen Haltebremse bei einem Aktor mit Planetengetriebe kein Haltestrom erforderlich.
5) Die Selbsthemmung des Schneckengetriebes kann zusätzlich für eine horizontale Ausrichtung und/oder Horizontierung der Fahrerkabine beim Stillstand des Kraftfahrzeugs genutzt werden.

Die Erfindung wird nachfolgend anhand einer bevorzugten Ausführungsform unter Bezugnahme auf die Zeichnung beschrieben. In der Zeichnung zeigen:
- Fig. 1: eine perspektivische Ansicht eines aktiven Stabilisators gemäß einer Ausführungsform,
- Fig. 2: eine teilweise Schnittansicht des aktiven Stabilisators entlang der aus Fig. 1 ersichtlichen Schnittlinie A-A und
- Fig. 3: eine Schnittansicht des aktiven Stabilisators entlang der aus Fig. 2 ersichtlichen Schnittlinie B-B.

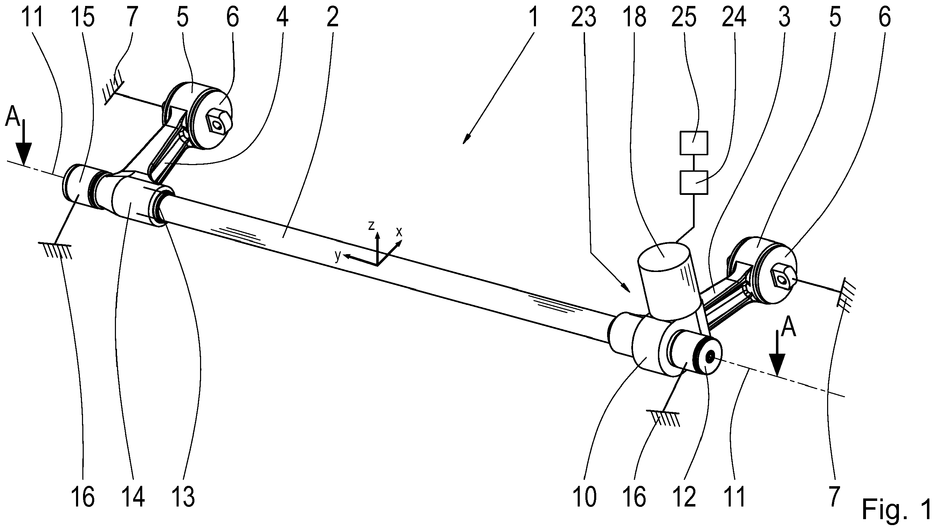

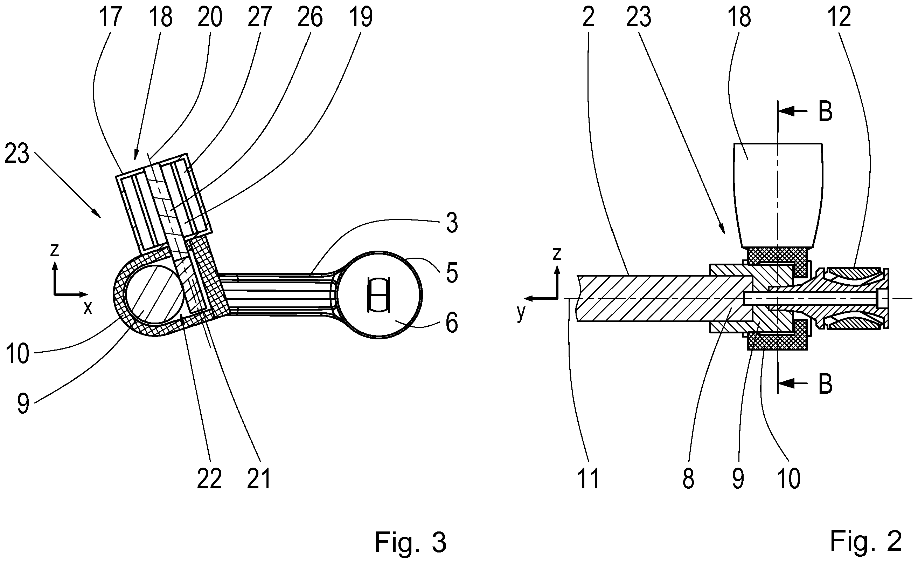

Aus Fig. 1 ist eine perspektivische Ansicht eines aktiven Stabilisators 1 gemäß einer Ausführungsform ersichtlich, der ein sich in einer Querrichtung y erstreckendes Verbindungsglied 2 in Form einer Drehstabfeder und zwei in Querrichtung y zueinander beabstandete Hebel 3 und 4 aufweist, die über die Drehstabfeder 2 miteinander verbunden sind. Die Hebel 3 und 4 erstrecken sich in einer senkrecht zur Querrichtung y verlaufenden Längsrichtung x von der Drehstabfeder 2 weg und weisen an ihren der Drehstabfeder 2 abgewandten Enden jeweils eine Lageraufnahe 5 in Form eines Lagerauges auf, wobei in jeder der Lageraufnahmen 5 ein Gummilager 6 sitzt. Die Hebel 3 und 4 sind mittels der Gummilager 6 mit einer lediglich schematisch angedeuteten Fahrerkabine 7 eines Kraftfahrzeugs verbunden. Die Drehstabfeder 2 ist mit einem ersten Endbereich 8 drehstarr mit einem Schneckenrad 9 verbunden, welches in einem starr mit dem Hebel 3 verbundenen Gehäuse 10 um eine in Querrichtung y verlaufende Drehachse 11 drehbar gelagert ist, die mit der Drehachse der Drehstabfeder 2 zusammenfällt. Die Drehstabfeder 2 und das Schneckenrad 9 sind dabei bezüglich der Drehachse 11 insbesondere konzentrisch und/oder koaxial angeordnet. Der erste Endbereich 8 ist dabei aus Fig. 2 ersichtlich, die eine teilweise Schnittansicht des aktiven Stabilisators 1 entlang der aus Fig. 1 ersichtlichen Schnittlinie A-A zeigt, die auf der Drehachse 11 liegt. Der Hebel 3 wird auch als erster Hebel bezeichnet. Aus Fig. 1 ist ferner eine Hochrichtung z ersichtlich, die senkrecht zur Längsrichtung x und senkrecht zur Querrichtung y verläuft.

Mit dem Schneckenrad 9 und/oder dem ersten Endbereich 8 ist ein Lagerelement 12 drehstarr verbunden, welches sich auf der der Drehstabfeder 2 gegenüberliegenden Seite des Gehäuses 10 aus dem Gehäuse 10 heraus erstreckt. Das Lagerelement 12 ist vorzugsweise zylindrisch oder im Wesentlichen zylindrisch ausgebildet.

Insbesondere sind die Drehstabfeder 2 und das Lagerelement 12 bezüglich der Drehachse 11 koaxial angeordnet. Mit seinem dem ersten Endbereich 8 gegenüberliegenden zweiten Endbereich 13 sitzt die Drehstabfeder 2 in einer Drehstabfederaufnahme 14 des Hebels 4 und ist drehstarr mit der Drehstabfederaufnahme 14 und/oder mit dem zweiten Hebel 4 verbunden. Die Drehstabfederaufnahme 14 ist z.B. als Lagerauge ausgebildet. Beispielsweise ist die Drehstabfeder 2 mit ihrem zweiten Endbereich 13 in die Drehstabfederaufnahme 14 eingepresst. Der Hebel 4 wird auch als zweiter Hebel bezeichnet. Ferner ist mit dem zweiten Endbereich 13 ein Lagerelement 15 drehstarr verbunden, welches sich auf der der Drehstabfeder 2 gegenüberliegenden Seite der Drehstabfederaufnahme 14 aus der Drehstabfederaufnahme 14 heraus erstreckt. Das Lagerelement 15 ist vorzugsweise zylindrisch oder im Wesentlichen zylindrisch ausgebildet. Insbesondere sind die Drehstabfeder 2 und das Lagerelement 15 bezüglich der Drehachse 11 koaxial angeordnet. Mittels der Lagerelemente 12 und 15 ist die Drehstabfeder 2 mit einem lediglich schematisch angedeuteten Fahrzeugrahmen 16 des Kraftfahrzeugs verbunden.

Mit dem Gehäuse 10 ist ein Motorgehäuse 17 eines Elektromotors 18 starr verbunden, der lediglich schematisch angedeutet ist. Der Elektromotor 18 umfasst einen Rotor 19 mit einer Motorwelle 26, die relativ zu dem Motorgehäuse 17 um eine Motorachse 20 drehbar ist und sich aus dem Motorgehäuse 17 heraus bis in das Gehäuse 10 hinein erstreckt. Ferner umfasst der Elektromotor 18 einen starr mit dem Motorgehäuse 17 verbundenen Stator 27, der den Rotor 19 umringt. Dies ist aus Fig. 3 ersichtlich, die eine Schnittansicht des Stabilisators 1 entlang der aus Fig. 2 ersichtlichen Schnittlinie B-B zeigt. Ferner ist aus Fig. 3 ersichtlich, dass sich das Motorgehäuse 17 und die Motorachse 20 näherungsweise in Hochrichtung z erstrecken. In dem Gehäuse 10 ist eine drehstarr mit der Motorwelle 26 und/oder dem Rotor 19 verbundene Schnecke 21 angeordnet, die mit dem Schneckenrad 9 kämmt und bezüglich der Motorachse 20 insbesondere konzentrisch und/oder koaxial mit der Motorwelle 26 und/oder dem Rotor 19 angeordnet ist. Die Schnecke 21 und das Schneckenrad 9 bilden zusammen ein Schneckengetriebe 22, welches selbsthemmend ausgebildet ist. Das Schneckengetriebe 22 ist dabei in dem Gehäuse 10 angeordnet, welches somit auch als Getriebegehäuse bezeichnet werden kann. Der Elektromotor 18 und das Schneckengetriebe 22 bilden zusammen einen Aktor 23, mittels welchem die Drehstabfeder 2 und/oder das erste Ende 8 der Drehstabfeder 2 relativ zu dem ersten Hebel 3 um die Drehachse 11 drehbar ist. Der Elektromotor 18 ist elektrisch mit einer Steuerungsvorrichtung 24 verbunden, mittels welcher der Elektromotor 18 steuerbar ist. Ferner ist die Steuerungsvorrichtung 24 elektrisch mit einer Stromversorgungseinrichtung 25 des Kraftfahrzeugs verbunden (siehe Fig. 1).

### Bezugszeichen

- 1: aktiver Stabilisator
- 2: Verbindungsglied / Drehstabfeder
- 3: erster Hebel
- 4: zweiter Hebel
- 5: Lageraufnahme / Lagerauge
- 6: Gummilager
- 7: Fahrerkabine
- 8: erster Endbereich der Drehstabfeder
- 9: Schneckenrad des Schneckengetriebes
- 10: Gehäuse / Getriebegehäuse
- 11: Drehachse
- 12: Lagerelement
- 13: zweiter Endbereich der Drehstabfeder
- 14: Drehstabfederaufnahme des zweiten Hebels
- 15: Lagerelement
- 16: Fahrzeugrahmen
- 17: Motorgehäuse des Elektromotors
- 18: Elektromotor
- 19: Rotor des Elektromotors
- 20: Motorachse des Elektromotors
- 21: Schnecke des Schneckengetriebes
- 22: Schneckengetriebe
- 23: Aktor
- 24: Steuerungsvorrichtung
- 25: Stromversorgungseinrichtung
- 26: Motorwelle des Elektromotors
- 27: Stator des Elektromotors
- x: Längsrichtung
- y: Querrichtung
- z: Hochrichtung

## Patentansprüche

1. Aktiver Stabilisator für eine Fahrerkabine (7) eines Kraftfahrzeugs, mit einem sich in einer Querrichtung (y) erstreckenden Verbindungsglied (2), zwei in Querrichtung (y) zueinander beabstandeten und durch das Verbindungsglied (2) miteinander verbundenen Hebeln (3, 4), die sich senkrecht oder näherungsweise senkrecht zur Querrichtung (y) von dem Verbindungsglied (2) wegerstrecken, und einem ein Schneckengetriebe (22) und einen unter Zwischenschaltung des Schneckengetriebes (22) mit dem Verbindungsglied (2) gekoppelten Motor (18) umfassenden Aktor (23), mittels welchem das Verbindungsglied (2) um eine in Querrichtung (y) verlaufende Drehachse (11) relativ zu einem ersten der Hebel (3) drehbar ist, **dadurch gekennzeichnet, dass** der Aktor (23) an dem ersten Hebel (3) oder im Bereich des ersten Hebels (3) angeordnet ist, wobei das Schneckengetriebe (22) eine Schnecke (21) und ein Schneckenrad (9) aufweist, welches mit der Schnecke (21) kämmt, wobei der Motor (18) einen Stator (27) und einen relativ zu diesem drehbaren Rotor (19) aufweist, der drehstarr mit der Schnecke (21) verbunden ist und wobei das Schneckenrad (9) drehstarr mit dem Verbindungsglied (2) verbunden ist und der Stator (27) an dem ersten Hebel (3) befestigt ist.

2. Aktiver Stabilisator nach Anspruch 1, **dadurch gekennzeichnet, dass** das Verbindungsglied (2) drehstarr mit einem zweiten der Hebel (4) verbunden ist.

3. Aktiver Stabilisator nach Anspruch 1 oder 2, **dadurch gekennzeichnet, dass** das Verbindungsglied (2) eine Drehstabfeder ist.

4. Aktiver Stabilisator nach einem der vorangehenden Ansprüche, **dadurch gekennzeichnet, dass** das Verbindungsglied (2) an einer ersten Fahrzeugkomponente gelagert ist und die Hebel (3, 4) im Abstand zur Drehachse (11) an einer zweiten Fahrzeugkomponente gelagert sind.

5. Aktiver Stabilisator nach Anspruch 4, **dadurch gekennzeichnet, dass** eine der Fahrzeugkomponenten durch einen Fahrzeugrahmen (16) und eine andere der Fahrzeugkomponenten durch die Fahrerkabine (7) gebildet ist.

6. Aktiver Stabilisator nach einem der vorangehenden Ansprüche, **dadurch gekennzeichnet, dass** die Hebel (3, 4) im Abstand zur Drehachse (11) jeweils eine Lageraufnahme (5) umfassen, in die ein Gummilager (6) eingesetzt ist, wobei die Hebel (3, 4) mittels der Gummilager (6) an der zweiten Fahrzeugkomponente gelagert sind.

7. Aktiver Stabilisator nach einem der vorangehenden Ansprüche, **dadurch gekennzeichnet, dass** der Motor (18) ein Elektromotor ist.

8. Aktiver Stabilisator nach einem der vorangehenden Ansprüche, **dadurch gekennzeichnet, dass** sich die Hebel (3, 4) in oder näherungsweise in einer senkrecht zur Querrichtung (y) verlaufenden Längsrichtung (x) erstrecken.

9. Aktiver Stabilisator nach einem der vorangehenden Ansprüche, **dadurch gekennzeichnet, dass** das Schneckengetriebe (22) selbsthemmend ausgebildet ist.

## Claims

1. Active stabilizer for a driver's cab (7) of a motor vehicle, having a connecting element (2) extending in a transverse direction (y), having two levers (3, 4) which are spaced apart from one another in the transverse direction (y) and which are connected to one another by the connecting element (2) and which extend away from the connecting element (2) perpendicularly or approximately perpendicularly with respect to the transverse direction (y), and having a worm gear (22) and an actuator (23) which comprises a motor (18) coupled via the worm gear (22) to the connecting element (2) and by means of which the connecting element (2) is rotatable relative to a first of the levers (3) about an axis of rotation (11) running in the transverse direction (y), **characterized in that** the actuator (23) is arranged on the first lever (3) or in the region of the first lever (3), wherein the worm gear (22) has a worm (21) and a worm wheel (9) which meshes with the worm (21), wherein the motor (18) has a stator (27) and a rotor (19) which is rotatable relative to said stator and which is connected rotationally rigidly to the worm (21), and wherein the worm wheel (9) is connected rotationally rigidly to the connecting element (2), and the stator (27) is fastened to the first lever (3).

2. Active stabilizer according to Claim 1, **characterized in that** the connecting element (2) is connected rotationally rigidly to a second of the levers (4).

3. Active stabilizer according to Claim 1 or 2, **characterized in that** the connecting element (2) is a torsion bar spring.

4. Active stabilizer according to any of the preceding claims, **characterized in that** the connecting element (2) is mounted on a first vehicle component and the levers (3, 4) are mounted, with a spacing to the axis of rotation (11), on a second vehicle component.

5. Active stabilizer according to Claim 4, **characterized in that** one of the vehicle components is formed by a vehicle frame (16) and another of the vehicle components is formed by the driver's cab (7).

6. Active stabilizer according to any of the preceding claims, **characterized in that** the levers (3, 4) comprise, with a spacing to the axis of rotation (11), in each case one bearing receptacle (5) into which a rubber bearing (6) is inserted, wherein the levers (3, 4) are mounted by means of the rubber bearings (6) on the second vehicle component.

7. Active stabilizer according to any of the preceding claims, **characterized in that** the motor (18) is an electric motor.

8. Active stabilizer according to any of the preceding claims, **characterized in that** the levers (3, 4) extend in or approximately in a longitudinal direction (x) running perpendicularly to the transverse direction (y).

9. Active stabilizer according to any of the preceding claims, **characterized in that** the worm gear (22) is of self-locking design.

## Revendications

1. Stabilisateur actif, destiné à une cabine de conducteur (7) d'un véhicule automobile, comprenant un élément de liaison (2) s'étendant dans une direction transversale (y), deux leviers (3, 4) espacés l'un de l'autre dans la direction transversale (y), reliés entre eux par l'élément de liaison (2) et s'éloignant de l'élément de liaison (2) perpendiculairement ou à peu près perpendiculairement à la direction transversale (y), et un actionneur (23) qui comprend un engrenage à vis sans fin (22) et un moteur (18) accouplé à l'élément de liaison (2) par l'intermédiaire de l'engrenage à vis sans fin (22) et au moyen duquel l'élément de liaison (2) peut tourner sur un axe de rotation (11), s'étendant dans la direction transversale (y), par rapport à un premier des leviers (3), **caractérisé en ce que** l'actionneur (23) est disposé au niveau du premier levier (3) ou dans la région du premier levier (3), l'engrenage à vis sans fin (22) comportant une vis sans fin (21) et un pignon (9) s'engrenant avec la vis sans fin (21), le moteur (18) comportant un stator (27) et un rotor (19) qui peut tourner par rapport à celui-ci et qui est relié solidairement en rotation à ladite vis sans fin (21) et le pignon (9) étant relié solidairement en rotation à l'élément de liaison (2) et le stator (27) étant fixé au premier levier (3).

2. Stabilisateur actif selon la revendication 1, **caractérisé en ce que** l'élément de liaison (2) est relié solidairement en rotation à un deuxième levier (4).

3. Stabilisateur actif selon la revendication 1 ou 2, **caractérisé en ce que** l'élément de liaison (2) est un ressort à barre de torsion.

4. Stabilisateur actif selon l'une des revendications précédentes, **caractérisé en ce que** l'élément de liaison (2) est monté sur un premier composant de véhicule et **en ce que** les leviers (3, 4) sont montés sur un deuxième composant de véhicule à distance de l'axe de rotation (11).

5. Stabilisateur actif selon la revendication 4, **caractérisé en ce que** l'un des composants de véhicule est formé par un châssis de véhicule (16) et un autre des composants de véhicule est formé par la cabine de conducteur (7).

6. Stabilisateur actif selon l'une des revendications précédentes, **caractérisé en ce que** les leviers (3, 4) comprennent chacun, à distance de l'axe de rotation (11), un logement de palier (5) dans lequel est inséré un palier en caoutchouc (6), les leviers (3, 4) étant montés sur le deuxième composant de véhicule au moyen des paliers en caoutchouc (6).

7. Stabilisateur actif selon l'une des revendications précédentes, **caractérisé en ce que** le moteur (18) est un moteur électrique.

8. Stabilisateur actif selon l'une des revendications précédentes, **caractérisé en ce que** les leviers (3, 4) s'étendent dans, ou à peu près dans, la direction longitudinale (x) perpendiculaire à la direction transversale (y).

9. Stabilisateur actif selon l'une des revendications précédentes, **caractérisé en ce que** l'engrenage à vis sans fin (22) est autobloquant.
